(19) Europäisches Patentamt
European Patent Office
Office européen des brevets

(11) **EP 4 429 926 B1**

(12) **EUROPÄISCHE PATENTSCHRIFT**

(45) Veröffentlichungstag und Bekanntmachung des Hinweises auf die Patenterteilung:
**23.04.2025 Patentblatt 2025/17**

(21) Anmeldenummer: **22817943.8**

(22) Anmeldetag: **15.11.2022**

(51) Internationale Patentklassifikation (IPC):
**B60W 50/00** (2006.01)   **B60W 30/14** (2006.01)
**B60W 60/00** (2020.01)

(52) Gemeinsame Patentklassifikation (CPC):
**B60W 30/143; B60W 60/0015;** B60W 2050/0008;
B60W 2520/10; B60W 2520/105; B60W 2552/30;
B60W 2710/182; B60W 2720/106

(86) Internationale Anmeldenummer:
**PCT/EP2022/081896**

(87) Internationale Veröffentlichungsnummer:
**WO 2023/099193 (08.06.2023 Gazette 2023/23)**

(54) **VERFAHREN UND VORRICHTUNG ZUR LÄNGSREGELUNG EINES FAHRZEUGS**

METHOD AND DEVICE FOR THE LONGITUDINAL CONTROL OF A VEHICLE

PROCÉDÉ ET DISPOSITIF DE COMMANDE LONGITUDINALE D'UN VÉHICULE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **30.11.2021 DE 102021213486**

(43) Veröffentlichungstag der Anmeldung:
**18.09.2024 Patentblatt 2024/38**

(73) Patentinhaber:
- **Mercedes-Benz Group AG**
  **70372 Stuttgart (DE)**
- **Robert Bosch GmbH**
  **70469 Stuttgart (DE)**

(72) Erfinder:
- **HUSKIC, Goran**
  **70374 Stuttgart (DE)**
- **OVEISI, Atta**
  **70734 Fellbach (DE)**
- **FÜRSICH, Alexander**
  **70180 Stuttgart (DE)**
- **ROTHERMEL, Thomas**
  **71272 Renningen (DE)**
- **KUHN, Klaus-Peter**
  **73269 Hochdorf (DE)**
- **BOESCH, Peter**
  **71229 Leonberg (DE)**
- **KEMPF, André**
  **70563 Stuttgart (DE)**

(74) Vertreter: **Liedtke & Partner Patentanwälte**
**Gerhart-Hauptmann-Straße 10/11**
**99096 Erfurt (DE)**

(56) Entgegenhaltungen:
EP-A2- 1 008 482    DE-A1- 102018 125 250
DE-B3- 102017 010 180    US-A1- 2021 078 573

**Beschreibung**

Die Erfindung betrifft ein Verfahren zur Längsregelung eines Fahrzeugs.

Die Erfindung betrifft weiterhin eine Vorrichtung zur Längsregelung eines Fahrzeugs.

Aus der DE 10 2017 010 180 B3 sind eine Vorrichtung und ein Verfahren zur Regelung einer Längsposition eines Fahrzeugs mittels eines Längspositionsreglers, der aus einer längsdynamischen Vorsteuersollgröße und aus längsdynamischen Regelfehlergrößen ein Längsbeschleunigungsstellsignal für eine unterlagerte Beschleunigungsregeleinheit erzeugt, bekannt. Dabei werden ein aktueller, einem aktuellen Zeitpunkt entsprechender Regelreferenzpunkt und ein vorausliegender, einem vorgebbaren Vorausschauzeitpunkt entsprechender Regelreferenzpunkt als regelrelevante Zeitpunkte bestimmt. Für jeden der Regelreferenzpunkte werden aktuelle oder prädizierte Ist-Soll-Abweichungen einer Längsposition, einer Fahrgeschwindigkeit und einer Beschleunigung ermittelt und der Bildung der längsdynamischen Regelfehlergrößen zugrunde gelegt. Weiterhin werden für jeden der Regelreferenzpunkte Sollwerte der Beschleunigung bestimmt und der Bildung der längsdynamischen Vorsteuersollgröße zugrunde gelegt. Dabei wird die längsdynamische Vorsteuersollgröße gebildet, indem die für die Regelreferenzpunkte bestimmten Sollwerte der Beschleunigung miteinander gewichtet summiert werden.

Weiterhin ist aus der DE 10 2018 125 250 A1 ein Verfahren zur automatisierten Längs- und Querführung eines Fahrzeugs auf Basis eines Systemmodells des Fahrzeugs bekannt. Das Verfahren umfasst:

- Ermitteln eines Werts einer ersten Zustandskomponente als eine Abweichung eines Ist-Werts einer Zustandsgröße des Fahrzeugs von einem von einer Zieltrajektorie abhängigen geplanten Wert der Zustandsgröße; wobei die Zustandsgröße des Fahrzeugs über das Systemmodell von einer Stellgröße abhängig ist;
- Ermitteln von zeitlich variablen Beschränkungen der ersten Zustandskomponente und der Stellgröße für N Zeitpunkte ab dem Zeitpunkt k, mit N > 1;
- Ermitteln von Werten von ein oder mehreren zweiten Zustandskomponenten eines Beschränkungsmodells an dem Zeitpunkt k derart, dass die ermittelten, zeitlich variablen Beschränkungen der ersten Zustandskomponente und der Stellgröße durch Werte von einer zweiten Zustandskomponente an den N Zeitpunkten ab dem Zeitpunkt k approximiert werden;
- Ermitteln eines Werts der Stellgröße an dem Zeitpunkt k, auf Basis des Werts der ersten Zustandskomponente und auf Basis der Werte der ein oder mehreren zweiten Zustandskomponenten an dem Zeitpunkt k und auf Basis einer vordefinierten Funktion, die eingerichtet ist, unterschiedlichen Wertekombinationen der ersten Zustandskomponente und der ein oder mehreren zweiten Zustandskomponenten jeweils einen Wert der Stellgröße zuzuweisen; und
- Betreiben eines Fahrzeugführungssystems zur automatisierten Längs- und Querführung des Fahrzeugs in Abhängigkeit von dem ermittelten Wert der Stellgröße.

Die US 2021/078573 A1 beschreibt eine Fahrerassistenzvorrichtung, ein Fahrerassistenzverfahren und ein Fahrerassistenzsystem. Dabei wird ein Abweichungsrisiko eines Fahrzeugs von einer befahrbaren Breite einer Straße, auf der das Fahrzeug fährt, basierend auf einer Fahrumgebung vor dem Fahrzeug bestimmt. Weiterhin werden basierend auf dem Abweichungsrisiko von einen Aktuatorbetrieb betreffenden variablen Informationen bezüglich einer Betriebsvariable eines Aktuators bestimmt, die mit einem Lenkvorgang, Bremsvorgang oder einem Fahrvorgang zusammenhängt, der bewirkt, dass das Fahrzeug entlang der Zieltrajektorie fährt. Weiterhin werden die den Aktuatorbetrieb betreffenden variablen Informationen an den Aktuator ausgegeben.

Die EP 1 008 482 A2 beschreibt ein Kraftfahrzeug, umfassend:

- einen Antriebsstrang, umfassend einen Motor mit einer Drosselklappe, die selektiv bedient wird, um eine Beschleunigungskraft über Räder auf das Fahrzeug anzuwenden, die das Fahrzeug tragen und auf einer darunter liegenden Fläche antreiben;
- eine Fahrzeug-Geschwindigkeitssteuerung zur selektiven Drosselung des Motors über die Drosselklappe, um den Unterschied zwischen der tatsächlichen Fahrzeug-Geschwindigkeit und der voreingestellten Fahrzeug-Geschwindigkeit auf Null zu bringen;
- eine Abstands- und Abstandsänderungs-Mess-Einrichtung zum Bereitstellen von Abstands- und Abstandsänderungs-Mess-Signalen, die der Abstands- und der Abstandsänderungsmessung des unmittelbar vorausfahrenden Führungsfahrzeugs entsprechen; und
- eine Fahrzeug-Folgeabstands-Steuerung, die über die Fahrzeug-Geschwindigkeitssteuerung wirkt, um den Unterschied zwischen dem Abstand zu dem Führungsfahrzeug, der von der Abstandsänderungs-Mess-Einrichtung erhalten wurde, und einem Referenzabstand, der sich mit dem zeitgesteuerten Folgeabstand ändert, auf Null zu bringen;

Dabei schließen die Abstands- und Abstandsänderungs-Mess-Einrichtung und ein Fahrzeug-Geschwindigkeits-Sensor Rückkopplungsschleifen zu der Fahrzeug-Folgeabstands-Steuerung. Die Fahrzeug-Folgeabstands-Steuerung errechnet ein Geschwindigkeitsreferenzsignal, das eine Befehlseingabe an die Fahrzeug-Geschwindigkeitssteuerung bereitstellt. Das Geschwindigkeits-Referenzsignal umfasst

- eine algebraische Aufsummierung eines Terms, der proportional zur Eigengeschwindigkeit des Fahrzeugs ist, wie sie von dem Fahrzeug-Geschwindigkeits-Sensor gemessen wurde,
- eines Terms, der proportional zum Abstand des Führungsfahrzeugs ist, wie er von dem Abstandssignal gemessen wurde, und
- eines Terms, der proportional zur Abstandsänderungmessung des Führungsfahrzeug ist, wie er von dem Abstandsänderungs-Mess-Signal gemessen wurde.

Der Erfindung liegt die Aufgabe zu Grunde, ein neuartiges Verfahren und eine neuartige Vorrichtung zur Längsregelung eines Fahrzeugs anzugeben.

Die Aufgabe wird erfindungsgemäß gelöst durch ein Verfahren, welches die im Anspruch 1 angegebenen Merkmale aufweist, und durch eine Vorrichtung, welche die im Anspruch 6 angegebenen Merkmale aufweist.

Vorteilhafte Ausgestaltungen der Erfindung sind Gegenstand der Unteransprüche.

In dem erfindungsgemäßen Verfahren zur Längsregelung eines Fahrzeugs in Abhängigkeit einer Solltrajektorie, welche eine Reihe von vom Fahrzeug über die Zeit einzunehmenden Soll-Positionen vorgibt, wird basierend auf einem Ist-Zustand des Fahrzeugs eine Regler-Stellbeschleunigung zur Trajektorienregelung, mittels welchem das Fahrzeug gemäß Vorgaben der Solltrajektorie beschleunigt werden soll, ermittelt. Während einer Abfahrt der Solltrajektorie durch das Fahrzeug wird aus einem örtlichen Verlauf der Solltrajektorie eine Krümmung der Solltrajektorie an einer aktuellen Position des Fahrzeugs ermittelt, wobei anhand der Krümmung ein mit zunehmender Krümmung sinkender Beschleunigungsoffset ermittelt wird. Weiterhin wird während der Abfahrt der Solltrajektorie an der aktuellen Position des Fahrzeugs eine sich aus der Solltrajektorie ergebende Längsbeschleunigung als aktuelle Trajektorienbeschleunigung ermittelt. Die Regler-Stellbeschleunigung wird auf einen Wert begrenzt, welcher maximal einer Summe aus aktueller Trajektorienbeschleunigung und Beschleunigungsoffset entspricht, und das Fahrzeug wird gemäß der begrenzten Regler-Stellbeschleunigung beschleunigt.

Eine Trajektorienregelung eines automatisiert, insbesondere hochautomatisiert oder autonom fahrenden Fahrzeugs, ist eine grundlegende Voraussetzung zur Realisierung der automatisierten Fahrfunktion. Hierbei wird basierend auf Daten einer Umgebungserfassung entschieden, welche Aktionen das Fahrzeug zukünftig ausführen soll. Das Ergebnis dieser Entscheidung ist eine Trajektorie, welche beispielsweise eine Position des Fahrzeugs auf einer Fahrbahn über die Zeit abbildet und als Bewegungsreferenz in einer bekannten Fahrzeugumgebung dient. Die Trajektorienregelung ist dabei vorgesehen, dass der Trajektorie so genau wie möglich gefolgt wird. Falls sich aus irgendeinem Grund ein größerer Längspositionsregelfehler aufgebaut hat, entspricht eine Trajektorienvorgabe an der Soll-Position nicht einer Trajektorienvorgabe an einer Ist-Position auf der Fahrbahn, an welcher sich das Fahrzeug aktuell befindet. Das heißt, eine "Soll-Zeit" läuft weiter. Dabei besteht die Gefahr, dass sich das Fahrzeug beispielsweise in einer engen Kurve befindet und automatisiert beschleunigt, weil ein zeitlicher Referenzpunkt, das heißt die Soll-Position, in der Trajektorie örtlich bereits weiter voraus liegt, beispielsweise auf einer der Kurve nachfolgenden Geraden.

Im vorliegenden Verfahren wird eine Diskrepanz zwischen dem örtlichen Referenzpunkt, das heißt der Ist-Position des Fahrzeugs, und dem zeitlichen Referenzpunkt, das heißt der Soll-Position des Fahrzeugs in der Trajektorie, bei der Längsregelung des Fahrzeugs berücksichtigt. Dabei wird mittels des Verfahrens eine Soll-Beschleunigungsvorgabe limitiert, wenn diese an der Ist-Position zu hoch ist. Mit einer derartigen, krümmungsabhängigen Beschleunigungslimitierung an der Ist-Position können aus zu hohen Beschleunigungen resultierende gefährliche Situationen verhindert werden, beispielsweise zu hohe Beschleunigungen in einer engen Kurve.

Mit anderen Worten: Das Verfahren ermöglicht eine sichere Trajektorienregelung mit dem Ziel, eine geplante Position zu einem zugehörigen Zeitpunkt zu erreichen, wobei bei Bedarf die Beschleunigung an der Ist-Position durch ein krümmungsabhängiges Beschleunigungslimit unter den Wert der Beschleunigungsvorgabe an der Soll-Position begrenzt wird.

In einer möglichen Ausgestaltung des Verfahrens wird der Ist-Zustand des Fahrzeugs zumindest aus einer Ist-Geschwindigkeit des Fahrzeugs, einer Ist-Beschleunigung des Fahrzeugs und/oder einer Ist-Position des Fahrzeugs gebildet. Mittels dieser Größen ist der Ist-Zustand gut abbildbar, so dass eine zuverlässige Bestimmung der Regler-Stellbeschleunigung erfolgen kann.

In einer weiteren möglichen Ausgestaltung des Verfahrens wird als aktuelle Position des Fahrzeugs eine Ist-Position oder eine nächste Soll-Position aus der Reihe der Soll-Positionen verwendet. Dies ermöglicht eine einfach realisierbare und hinreichend genaue Ermittlung der aktuellen Position des Fahrzeugs zur Ermittlung der Krümmung.

In einer weiteren möglichen Ausgestaltung des Verfahrens wird die sich aus der Solltrajektorie ergebende Längsbeschleunigung aus einer zeitlichen Änderung von Abständen zwischen aufeinanderfolgenden Soll-Positionen der Solltrajektorie ermittelt. So lässt sich die aktuelle Trajektorienbeschleunigung einfach ermitteln.

In einer weiteren möglichen Ausgestaltung des Verfahrens wird die Solltrajektorie einem Trajektorienregler zugeführt, mittels welchem anhand der Regler-Stellbeschleunigung das Fahrzeug gemäß den Vorgaben der Solltrajektorie beschleunigt werden soll. Die begrenzte Regler-Stellbeschleunigung wird einer dem Trajektorienregler unterlagerten Beschleunigungsregeleinheit zugeführt, welche eine reale Beschleunigung des Fahrzeugs steuert und/oder regelt.

In einer weiteren möglichen Ausgestaltung des Verfahrens wird bei einer Überschreitung einer vorgegebenen Differenz zwischen der vorgegebenen Regler-Stellbeschleunigung und der begrenzten Regler-Stellbeschleunigung eine Neuberechnung der Solltrajektorie durchgeführt. Somit können eine Abweichung der Solltrajektorie von einer Isttrajektorie und daraus folgend auch eine Abweichung der Regler-Stellbeschleunigung von der berichtigten Regler-Stellbeschleunigung minimiert werden

Die erfindungsgemäße Vorrichtung zur Längsregelung eines Fahrzeugs in Abhängigkeit einer Solltrajektorie, welche eine Reihe von vom Fahrzeug über die Zeit einzunehmenden Soll-Positionen vorgibt, umfasst einen Trajektorienregler, welcher anhand einer diesem zugeführten Solltrajektorie basierend auf einem Ist-Zustand des Fahrzeugs eine Regler-Stellbeschleunigung zur Trajektorienregelung, mittels welchem das Fahrzeug gemäß Vorgaben der Solltrajektorie beschleunigt werden soll, ermittelt. Die Vorrichtung umfasst weiterhin eine Vorverarbeitungseinheit, welche während einer Abfahrt der Solltrajektorie durch das Fahrzeug aus einem örtlichen Verlauf der Solltrajektorie eine Krümmung der Solltrajektorie an einer aktuellen Position des Fahrzeugs ermittelt. Ferner ermittelt die Vorverarbeitungseinheit anhand der Krümmung einen mit zunehmender Krümmung sinkenden Beschleunigungsoffset und während der Abfahrt der Solltrajektorie an der aktuellen Position des Fahrzeugs eine sich aus der Solltrajektorie ergebende Längsbeschleunigung als aktuelle Trajektorienbeschleunigung. Zusätzlich umfasst die Vorrichtung eine Begrenzungseinheit, welche die Regler-Stellbeschleunigung auf einen Wert begrenzt, welcher maximal einer Summe aus aktueller Trajektorienbeschleunigung und Beschleunigungsoffset entspricht, sowie eine dem Trajektorienregler unterlagerte Beschleunigungsregeleinheit, welche das Fahrzeug gemäß der begrenzten Regler-Stellbeschleunigung beschleunigt.

Mittels der Vorrichtung kann eine Diskrepanz zwischen dem örtlichen Referenzpunkt, das heißt der Ist-Position des Fahrzeugs, und dem zeitlichen Referenzpunkt, das heißt der Soll-Position des Fahrzeugs in der Trajektorie, bei der Längsregelung des Fahrzeugs berücksichtigt werden. Dabei limitiert die Vorrichtung eine Soll-Beschleunigungsvorgabe, wenn diese an der Ist-Position zu hoch ist. Mit einer derartigen, krümmungsabhängigen Beschleunigungslimitierung an der Ist-Position können aus zu hohen Beschleunigungen resultierende gefährliche Situationen verhindert werden, beispielsweise zu hohe Beschleunigungen in einer engen Kurve.

Mit anderen Worten: Die Vorrichtung ermöglicht eine sichere Trajektorienregelung mit dem Ziel, eine geplante Position zu einem zugehörigen Zeitpunkt zu erreichen, wobei bei Bedarf die Beschleunigung an der Ist-Position durch ein krümmungsabhängiges Beschleunigungslimit unter den Wert der Beschleunigungsvorgabe an der Soll-Position begrenzt wird.

In einer möglichen Ausgestaltung der Vorrichtung ist die Beschleunigungsregeleinheit ein Fahrzeugbremssystem. Mittels diesem ist die begrenzte Regler-Stellbeschleunigung einfach und zuverlässig einstellbar.

In einer weiteren möglichen Ausgestaltung der Vorrichtung umfasst diese eine Regelfehlerüberwachungseinheit, welche bei einer Überschreitung einer vorgegebenen

Differenz zwischen der vorgegebenen Regler-Stellbeschleunigung und der begrenzten Regler-Stellbeschleunigung eine Neuberechnung der Solltrajektorie durchführt. Somit können eine Abweichung der Solltrajektorie von einer Isttrajektorie und daraus folgend auch eine Abweichung der Regler-Stellbeschleunigung von der berichtigten Regler-Stellbeschleunigung minimiert werden.

Ausführungsbeispiele der Erfindung werden im Folgenden anhand von Zeichnungen näher erläutert.

Dabei zeigen:

Fig. 1 schematisch eine Draufsicht einer Verkehrssituation mit einem Fahrzeug in einer Ist-Position und einer Soll-Position,

Fig. 2 schematisch zeitliche Verläufe einer Beschleunigung und einer Geschwindigkeit eines Fahrzeugs,

Fig. 3 schematisch ein Blockschaltbild einer Vorrichtung zur Längsregelung eines Fahrzeugs und

Fig. 4 schematisch einen Verlauf einer Solltrajektorie eines Fahrzeugs.

Einander entsprechende Teile sind in allen Figuren mit den gleichen Bezugszeichen versehen.

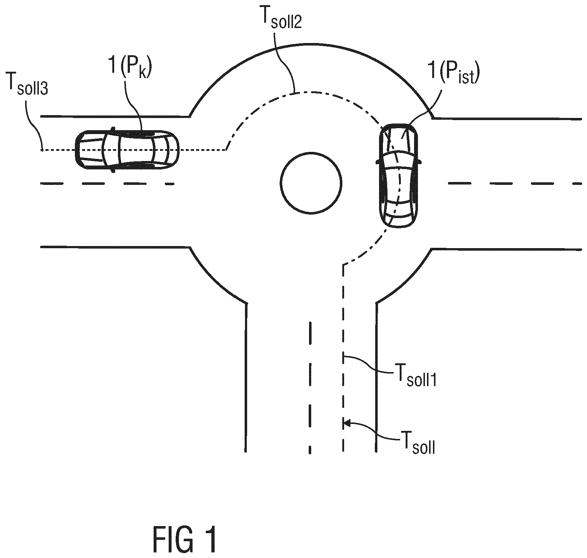

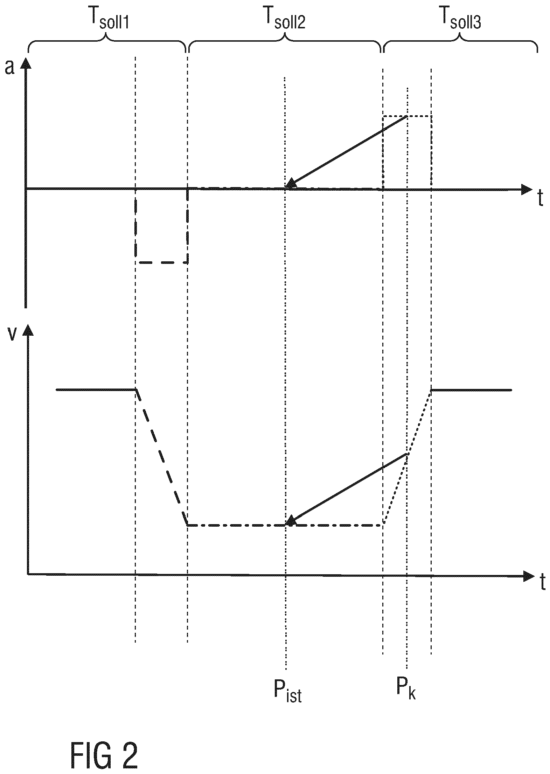

In Figur 1 ist eine Draufsicht einer Verkehrssituation mit einem Fahrzeug 1 in einer Ist-Position $P_{ist}$ und einer Soll-Position $P_k$ sowie einer Solltrajektorie $T_{soll}$ mit mehreren Trajektorienabschnitten $T_{soll1}$ bis $T_{soll3}$ dargestellt. In Figur 2 sind Verläufe einer Beschleunigung a und einer Geschwindigkeit v des Fahrzeugs 1 gemäß Figur 1 in Abhängigkeit von der Zeit t dargestellt.

Das Fahrzeug 1 ist zu einem automatisierten, insbesondere hochautomatisierten oder autonomen Fahrbetrieb ausgebildet. Zur Realisierung einer solchen automatisierten Fahrfunktion ist eine Trajektorienregelung grundlegende Voraussetzung.

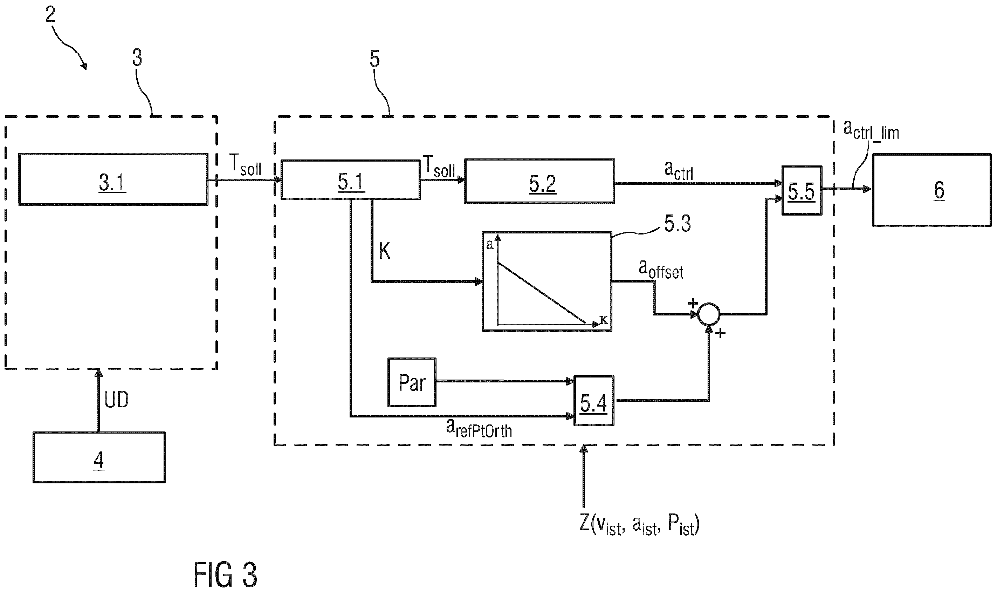

Bei dieser Trajektorienregelung wird basierend auf in Figur 3 näher gezeigten Daten UD einer Umgebungserfassung entschieden, welche Aktionen das Fahrzeug 1 zukünftig ausführen soll. Das Ergebnis dieser Entscheidung ist die Solltrajektorie $T_{soll}$, welche beispielsweise eine Position des Fahrzeugs 1 auf einer Fahrbahn über die Zeit t abbildet und als Bewegungsreferenz in einer bekannten Fahrzeugumgebung dient. Die Trajektorienregelung ist dabei vorgesehen, dass der Trajektorie so genau wie möglich gefolgt wird. Falls sich aus irgendeinem Grund ein größerer Längspositionsregelfehler aufgebaut hat, entspricht eine Trajektorienvorgabe an der Soll-Position $P_k$ nicht einer Trajektorienvorgabe an der Ist-Position $P_{ist}$ auf der Fahrbahn, an welcher sich das Fahrzeug 1 aktuell befindet. Das heißt, eine "Soll-Zeit" läuft weiter.

In der Darstellung ist am Beispiel eines Kreisverkehrs gezeigt, dass sich die Ist-Position $P_{ist}$ des automatisiert fahrenden Fahrzeugs 1 hinter der Soll-Position $P_k$ befindet. Die Ist-Position $P_{ist}$ befindet sich dabei im Kreisverkehr, während sich die Soll-Position $P_k$ bereits außerhalb des Kreisverkehrs nach einem Verlassen desselben befindet.

Wie Figur 2 zeigt, ist gemäß dem der Solltrajektorie $T_{soll}$ zugeordneten Geschwindigkeitsprofil und dem Beschleunigungsprofil vorgesehen, dass das Fahrzeug 1 innerhalb des Kreisverkehrs auf dem Trajektorienabschnitt $T_{soll2}$ mit niedriger konstanter Geschwindigkeit v fahren soll und auf dem Trajektorienabschnitt $T_{soll3}$ nach dem Kreisverkehr solange stärker beschleunigt werden soll, bis eine höhere Geschwindigkeit v erreicht ist. Das für den Trajektorienabschnitt $T_{soll3}$ vorgesehene Beschleunigungsprofil ist dabei nicht zur Anwendung für eine Straßengeometrie im Trajektorienabschnitt $T_{soll2}$ geeignet.

Da jedoch, wie in Figur 1 dargestellt, der zeitliche Referenzpunkt, das heißt die Soll-Position $P_k$ im Trajektorienabschnitt $T_{soll3}$, und der örtliche Referenzpunkt, das heißt die Ist-Position $P_{ist}$ im Trajektorienabschnitt $T_{soll2}$, weit auseinander liegen, besteht die Gefahr, dass sich das Fahrzeug 1 innerhalb des Kreisverkehrs auf dem Trajektorienabschnitt $T_{soll2}$ befindet und automatisiert beschleunigt, weil der zeitliche Referenzpunkt örtlich bereits weiter voraus liegt, vorliegend auf einer dem Kreisverkehr nachfolgenden Geraden im Trajektorienabschnitt $T_{soll3}$.

In dieser Situation würde im Betrieb eines typischen Trajektorienreglers versucht, einen vorliegenden Längspositionsfehler auszugleichen und das Fahrzeug 1 würde im Kreisverkehr stärker beschleunigen. Je nachdem, wie groß eine Krümmung K im Streckenverlauf ist, ist eine solche Situation generell unerwünscht und potenziell gefährlich.

Solche Fehler können auch dann auftreten, wenn ein so genanntes Regelfehlerüberwachungsmodul im System zum automatisierten Betrieb des Fahrzeugs 1 vorhanden ist, welches die Solltrajektorie $T_{soll}$ neu plant, wenn ein Regelfehler größer wird. Dies ist beispielsweise dann der Fall, wenn der Regelfehler zwar relativ groß ist, aber unterhalb einer festgelegten Schwelle zur Neu-Festlegung der Solltrajektorie $T_{soll}$ liegt.

Befindet sich die Ist-Position $P_{ist}$ abweichend zur Darstellung dagegen noch im Trajektorienabschnitt $T_{soll1}$ anstatt Trajektorienabschnitt $T_{soll2}$, wobei das Fahrzeug 1 noch verzögert, resultiert hieraus kein sicherheitsrelevantes Problem. In diesem Fall würde der Regelfehler noch mehr steigen, aber ohne unerwünschte Beschleunigung a.

In Figur 3 ist ein Blockschaltbild einer Vorrichtung 2 zur Längsregelung eines Fahrzeugs 1 dargestellt.

Die Vorrichtung 2 umfasst eine erste Recheneinheit 3 mit einem Trajektorienplanungsmodul 3.1, welches anhand von mittels einer Umgebungserfassungssensorik 4 erfassten Daten UD die Solltrajektorie $T_{soll}$ plant.

Um das anhand der Figuren 1 und 2 dargestellte Problem zu lösen, dass bei einer Abweichung der Ist-Position $P_{ist}$ von der Soll-Position $P_k$ unangepasste Beschleunigungen a des Fahrzeugs 1 im automatisierten Fahrbetrieb erfolgen, wird die Solltrajektorie $T_{soll}$ einer weiteren Recheneinheit 5 mit einem Vorverarbeitungsmodul 5.1, einem Trajektorienregler 5.2, einer Kennlinie 5.3, einem Maximalwertdetektor 5.4 und einer Begrenzungseinheit 5.5 zugeführt.

Dabei leitet das Vorverarbeitungsmodul 5.1 während einer Abfahrt der Solltrajektorie $T_{soll}$ durch das Fahrzeug 1 aus einem örtlichen Verlauf der Solltrajektorie $T_{soll}$ eine Krümmung K der Solltrajektorie $T_{soll}$ an einer aktuellen Position des Fahrzeugs 1 ab.

Anhand der Kennlinie 5.3, welche die Beschleunigung a des Fahrzeugs 1 in Abhängigkeit der Krümmung K darstellt, ermittelt das Vorverarbeitungsmodul 5.1 in Abhängigkeit der Krümmung K und insbesondere unter Verwendung von prädizierter Zukunftsinformation einen mit zunehmender Krümmung K sinkenden Beschleunigungsoffset $a_{offset}$. Dieser Beschleunigungsoffset $a_{offset}$ kann auch in Abhängigkeit eines Reibwerts einer Fahrbahnoberfläche gebildet werden und bildet eine erlaubte Beschleunigungsabweichung.

Weiterhin wird mittels des Vorverarbeitungsmoduls 5.1 während der Abfahrt der Solltrajektorie $T_{soll}$ an einer aktuellen Position des Fahrzeugs 1, beispielsweise der Ist-Position $P_{ist}$, eine sich aus der Solltrajektorie $T_{soll}$ ergebende Längsbeschleunigung als aktuelle Trajektorienbeschleunigung $a_{refPtOrth}$ ermittelt und der Begrenzungseinheit 5.5 zugeführt. Diese Trajektorienbeschleunigung $a_{refPtOrth}$ bildet eine Referenzbeschleunigung in einem Trajektorienpunkt nächstliegend zur aktuellen Position des Fahrzeugs 1.

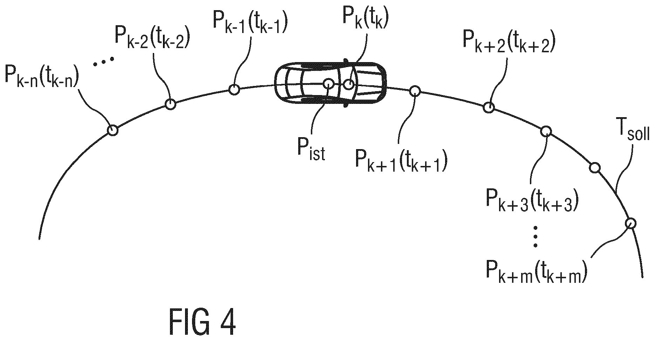

Abweichend zur Ist-Position $P_{ist}$ des Fahrzeugs 1 kann als aktuelle Position des Fahrzeugs 1 auch eine nächste Soll-Position $P_k$ aus einer in Figur 4 näher dargestellten Reihe von Soll-Positionen $P_{k-n}$ bis $P_{k+m}$ der Solltrajektorie $T_{soll}$ verwendet werden.

Die sich aus der Solltrajektorie $T_{soll}$ ergebende Längsbeschleunigung kann dabei aus einer zeitlichen Änderung von Abständen zwischen in Figur 4 näher dargestellten aufeinanderfolgenden Soll-Positionen $P_{k-n}$ bis $P_{k+m}$ der Solltrajektorie $T_{soll}$ ermittelt werden.

Der Beschleunigungsoffset $a_{offset}$ und die Trajektorienbeschleunigung $a_{refPtOrth}$ werden addiert, wobei eine gebildete Summe ebenfalls der Begrenzungseinheit 5.5 zugeführt wird.

Weiterhin wird mittels des Trajektorienreglers 5.2 anhand der diesem zugeführten Solltrajektorie $T_{soll}$ basierend auf einem Ist-Zustand Z des Fahrzeugs 1 eine Regler-Stellbeschleunigung $a_{ctrl}$ zur Trajektorienregelung ermittelt, mittels welchem das Fahrzeug 1 gemäß Vorgaben der Solltrajektorie $T_{soll}$ beschleunigt werden soll. Der Ist-Zustand Z des Fahrzeugs 1 ist dabei beispielsweise durch eine Ist-Geschwindigkeit $v_{ist}$, eine Ist-Beschleunigung $a_{ist}$ und die Ist-Position $P_{ist}$ des Fahrzeugs 1 gekennzeichnet.

Mittels der Begrenzungseinheit 5.5 wird aus dem Minimum der Summe des Beschleunigungsoffsets $a_{offset}$ sowie der Trajektorienbeschleunigung $a_{refPtOrth}$ und der Stellbeschleunigung $a_{ctrl}$ eine begrenzte Regler-Stellbeschleunigung $a_{ctrl\_lim}$ gemäß

$$a_{ctrl\_lim} = \min(a_{ctrl}, \max(Par, a_{refPtOrth}) + a_{offset}) \qquad (1)$$

bestimmt.

Dabei werden nur Trajektorienbeschleunigungen $a_{refPtOrlh}$ berücksichtigt, welche größer einem positiven Parameter Par sind, da sonst das Fahrzeug 1 in einer Verzögerungsphase stehen bleiben würde. Hierbei ist eine negative Trajektorienbeschleunigung $a_{refPtOrth}$ immer kleiner als eine positive Regler-Stellbeschleunigung $a_{ctrl}$ in einer darauffolgenden Beschleunigungsphase.

Die begrenzte Regler-Stellbeschleunigung $a_{ctrl\_lim}$ wird einer dem Trajektorienregler 5.2 unterlagerten Beschleunigungsregeleinheit 6 zugeführt, welche das Fahrzeug 1 gemäß der begrenzten Regler-Stellbeschleunigung $a_{ctrl\_lim}$ beschleunigt. Die Beschleunigungsregeleinheit 6 ist beispielsweise ein Fahrzeugbremssystem. Auf diese Art ist der Regelsystem-Ausgang nie größer als die örtliche Trajektorienbeschleunigung $a_{refPtOrth}$, versetzt nach oben um eine erlaubte krümmungsabhängige Abweichung.

Somit ist es möglich, dass das Fahrzeug 1 in der in Figur 1 dargestellten Situation an der Ist-Position $P_{ist}$ nicht unerwünscht stark beschleunigen würde. Auf einer geraden Strecke hingegen kann das Fahrzeug 1 dagegen ausreichend stark beschleunigen und einen Regelfehler ausgleichen.

Figur 4 zeigt einen Verlauf einer möglichen Solltrajektorie $T_{soll}$ eines Fahrzeugs 1. Die Solltrajektorie $T_{soll}$ gibt dabei eine Reihe von vom Fahrzeug 1 über die Zeit t zu jeweiligen Zeitpunkten $t_{k-n}$ bis $t_{k+m}$ einzunehmenden Soll-Positionen $P_{k-n}$ bis $P_{k+m}$ vor.

Bezugszeichenliste

| | |
|---|---|
| 1 | Fahrzeug |
| 2 | Vorrichtung |
| 3 | Recheneinheit |
| 3.1 | Trajektorienplanungsmodul |
| 4 | Umgebungserfassungssensorik |
| 5 | Recheneinheit |
| 5.1 | Verarbeitungsmodul |
| 5.2 | Trajektorienregler |
| 5.3 | Kennlinie |
| 5.4 | Maximalwertdetektor |
| 5.5 | Begrenzungseinheit |
| 6 | Beschleunigungsregeleinheit |

| | |
|---|---|
| a | Beschleunigung |
| $a_{ctrl}$ | Regler-Stellbeschleunigung |
| $a_{ctrl\_lim}$ | begrenzte Regler-Stellbeschleunigung |
| $a_{ist}$ | Ist-Beschleunigung |
| $a_{offset}$ | Beschleunigungsoffset |
| $a_{refPtOrth}$ | Trajektorienbeschleunigung |
| K | Krümmung |
| Par | Parameter |

| | |
|---|---|
| $P_{ist}$ | Ist-Position |
| $P_{k-n}$ bis $P_{k+m}$ | Soll-Position |
| t | Zeit |
| $t_{k-n}$ bis $t_{k+m}$ | Zeitpunkt |
| $T_{soll}$ | Solltrajektorie |
| $T_{soll1}$ bis $T_{soll3}$ | Trajektorienabschnitt |
| UD | Daten |
| v | Geschwindigkeit |
| $v_{ist}$ | Ist-Geschwindigkeit |
| Z | Ist-Zustand |

**Patentansprüche**

1. Verfahren zur Längsregelung eines Fahrzeugs (1) in Abhängigkeit einer Solltrajektorie ($T_{soll}$), welche eine Reihe von vom Fahrzeug (1) über die Zeit (t) einzunehmenden Soll-Positionen ($P_{k-n}$ bis $P_{k+m}$) vorgibt, wobei

   - basierend auf einem Ist-Zustand (Z) des Fahrzeugs (1) eine Regler-Stellbeschleunigung ($a_{ctrl}$) zur Trajektorienregelung, mittels welcher das Fahrzeug (1) gemäß Vorgaben der Solltrajektorie ($T_{soll}$) beschleunigt werden soll, ermittelt wird,
   - während einer Abfahrt der Solltrajektorie ($T_{soll}$) durch das Fahrzeug (1) aus einem örtlichen Verlauf der Solltrajektorie ($T_{soll}$) eine Krümmung (K) der Solltrajektorie ($T_{soll}$) an einer aktuellen Position des Fahrzeugs (1) ermittelt wird,
   - anhand der Krümmung (K) ein mit zunehmender Krümmung (K) sinkender Beschleunigungsoffset ($a_{offset}$) ermittelt wird,
   - während der Abfahrt der Solltrajektorie ($T_{soll}$) an der aktuellen Position des Fahrzeugs (1) eine sich aus der Solltrajektorie ($T_{soll}$) ergebende Längsbeschleunigung als aktuelle Trajektorienbeschleunigung ($a_{refPtOrth}$) ermittelt wird,
   - die Regler-Stellbeschleunigung ($a_{ctrl}$) auf einen Wert begrenzt wird, welcher maximal einer Summe aus aktueller Trajektorienbeschleunigung ($a_{refPtOrth}$) und Beschleunigungsoffset ($a_{offset}$) entspricht, und
   - das Fahrzeug (1) gemäß der begrenzten Regler-Stellbeschleunigung ($a_{ctrl\_lim}$) beschleunigt wird.

2. Verfahren nach Anspruch 1, wobei der Ist-Zustand (Z) des Fahrzeugs (1) zumindest aus einer Ist-Geschwindigkeit ($v_{ist}$), einer Ist-Beschleunigung ($a_{ist}$) und/oder einer Ist-Position ($P_{ist}$) des Fahrzeugs (1) gebildet wird.

3. Verfahren nach Anspruch 1 oder 2, wobei als aktuelle Position des Fahrzeugs (1) eine Ist-Position ($P_{ist}$) oder eine nächste Soll-Position ($P_k$) aus der Reihe der Soll-Positionen ($P_{k-n}$ bis $P_{k+m}$) verwendet wird.

4. Verfahren nach einem der vorhergehenden Ansprüche, wobei

   - die Solltrajektorie ($T_{soll}$) einem Trajektorienregler (5.2) zugeführt wird, mittels welchem anhand der Regler-Stellbeschleunigung ($a_{ctrl}$) das Fahrzeug (1) gemäß den Vorgaben der Solltrajektorie ($T_{soll}$) beschleunigt werden soll und
   - die begrenzte Regler-Stellbeschleunigung ($a_{ctrl\_lim}$) einer dem Trajektorienregler (5.2) unterlagerten Beschleunigungsregeleinheit (6) zugeführt wird, welche eine reale Beschleunigung (a) des Fahrzeugs (1) steuert und/oder regelt.

5. Verfahren nach einem der vorhergehenden Ansprüche, wobei bei einer Überschreitung einer vorgegebenen Differenz zwischen der vorgegebenen Regler-Stellbeschleunigung ($a_{ctrl}$) und der begrenzten Regler-Stellbeschleunigung ($a_{ctrl\_lim}$) eine Neuberechnung der Solltrajektorie ($T_{soll}$) durchgeführt wird.

6. Vorrichtung (2) zur Längsregelung eines Fahrzeugs (1) in Abhängigkeit einer Solltrajektorie ($T_{soll}$), welche eine Reihe von vom Fahrzeug (1) über die Zeit (t) einzunehmenden Soll-Positionen ($P_{k-n}$ bis $P_{k+m}$) vorgibt, wobei

   - ein Trajektorienregler (5.2) vorgesehen ist, welcher anhand einer diesem zugeführten Solltrajektorie ($T_{soll}$) basierend auf einem Ist-Zustand (Z) des Fahrzeugs (1) eine Regler-Stellbeschleunigung ($a_{ctrl}$) zur Trajektorienregelung, mittels welchem das Fahrzeug (1) gemäß Vorgaben der Solltrajektorie ($T_{soll}$) beschleunigt werden soll, ermittelt,
   - eine Vorverarbeitungseinheit (5.1) vorgesehen ist, welche

- während einer Abfahrt der Solltrajektorie ($T_{soll}$) durch das Fahrzeug (1) aus einem örtlichen Verlauf der Solltrajektorie ($T_{soll}$) eine Krümmung (K) der Solltrajektorie ($T_{soll}$) an einer aktuellen Position des Fahrzeugs (1) ermittelt,
- anhand der Krümmung (K) einen mit zunehmender Krümmung (K) sinkenden Beschleunigungsoffset ($a_{offset}$) ermittelt und
- während der Abfahrt der Solltrajektorie ($T_{soll}$) an der aktuellen Position des Fahrzeugs (1) eine sich aus der Solltrajektorie ($T_{soll}$) ergebende Längsbeschleunigung als aktuelle Trajektorienbeschleunigung ($a_{refPtOrth}$) ermittelt,

- eine Begrenzungseinheit (5.5) vorgesehen ist, welche die Regler-Stellbeschleunigung ($a_{ctrl}$) auf einen Wert begrenzt, welcher maximal einer Summe aus aktueller Trajektorienbeschleunigung ($a_{refPtOrth}$) und Beschleunigungsoffset ($a_{offset}$) entspricht,
- eine dem Trajektorienregler (5.2) unterlagerte Beschleunigungsregeleinheit (6) vorgesehen ist, welche das Fahrzeug (1) gemäß der begrenzten Regler-Stellbeschleunigung ($a_{ctrl\_lim}$) beschleunigt.

7. Vorrichtung (2) nach Anspruch 6, wobei die Beschleunigungsregeleinheit (6) ein Fahrzeugbremssystem ist.

8. Vorrichtung (2) nach Anspruch 6 oder 7, umfassend eine Regelfehlerüberwachungseinheit, welche bei einer Überschreitung einer vorgegebenen Differenz zwischen der vorgegebenen Regler-Stellbeschleunigung ($a_{ctrl}$) und der begrenzten Regler-Stellbeschleunigung ($a_{ctrl\_lim}$) eine Neuberechnung der Solltrajektorie ($T_{soll}$) durchführt.

**Claims**

1. Method for the closed loop longitudinal control of a vehicle (1) as a function of a target trajectory ($T_{soll}$) which specifies a series of target positions ($P_{k-n}$ to $P_{k+m}$) to be assumed by the vehicle (1) over the time (t), wherein

   - based on an actual state (Z) of the vehicle (1), a closed loop controller actuating acceleration ($a_{ctrl}$) for closed loop trajectory control is determined, by means of which the vehicle (1) is to be accelerated in accordance with specifications of the target trajectory ($T_{soll}$),
   - during following of the target trajectory ($T_{soll}$) by the vehicle (1), a curvature (K) of the target trajectory ($T_{soll}$) is determined from a local course of the target trajectory ($T_{soll}$) at a current position of the vehicle (1),
   - an acceleration offset ($a_{offset}$) which decreases with increasing curvature (K) is determined based on the curvature (K),
   - during the following of the target trajectory ($T_{soll}$), a longitudinal acceleration resulting from the target trajectory ($T_{soll}$) is determined at the current position of the vehicle (1) as the current trajectory acceleration ($a_{refPtOrth}$),
   - the closed loop controller actuating acceleration ($a_{ctrl}$) is limited to a value which corresponds at most to a sum of the current trajectory acceleration ($a_{refPtOrth}$) and the acceleration offset ($a_{offset}$), and
   - the vehicle (1) is accelerated in accordance with the limited closed loop controller actuating acceleration ($a_{ctrl\_lim}$).

2. Method according to Claim 1, wherein the actual state (Z) of the vehicle (1) is formed at least from an actual speed ($v_{ist}$), an actual acceleration ($a_{ist}$) and/or an actual position ($P_{ist}$) of the vehicle (1).

3. Method according to Claim 1 or 2, wherein an actual position ($P_{ist}$) or a next target position ($P_k$) from the series of target positions ($P_{k-n}$ to $P_{k+m}$) is used as the current position of the vehicle (1).

4. Method according to one of the preceding claims, wherein

   - the target trajectory ($T_{soll}$) is supplied to a closed loop trajectory controller (5.2), by means of which the vehicle (1) is to be accelerated according to the specifications of the target trajectory ($T_{soll}$) on the basis of the closed loop controller actuating acceleration ($a_{ctrl}$), and
   - the limited closed loop controller actuating acceleration ($a_{ctrl\_lim}$) is supplied to a closed loop acceleration control unit (6) which is subordinate to the closed loop trajectory controller (5.2), which open loop controls and/or closed loop controls a real acceleration (a) of the vehicle (1).

5. Method according to one of the preceding claims, wherein a recalculation of the target trajectory ($T_{soll}$) is carried out when a predetermined difference between the predetermined closed loop controller actuating acceleration ($a_{ctrl}$) and

the limited closed loop controller actuating acceleration ($a_{ctrl\_lim}$) is exceeded.

6. Apparatus (2) for the closed loop longitudinal control of a vehicle (1) as a function of a target trajectory ($T_{soll}$) which specifies a series of target positions ($P_{k-n}$ to $P_{k+m}$) to be assumed by the vehicle (1) over the time (t), wherein

- a closed loop trajectory controller (5.2) is provided which, on the basis of a target trajectory ($T_{soll}$) supplied to it, based on an actual state (Z) of the vehicle (1), determines a closed loop controller actuating acceleration ($a_{ctrl}$) for trajectory control, by means of which the vehicle (1) is to be accelerated in accordance with specifications of the target trajectory ($T_{soll}$),
- a pre-processing unit (5.1) is provided which
- during following of the target trajectory ($T_{soll}$) by the vehicle (1), determines a curvature (K) of the target trajectory ($T_{soll}$) from a local course of the target trajectory ($T_{soll}$) at a current position of the vehicle (1),
- uses the curvature (K) to determine an acceleration offset ($a_{offset}$) which decreases with increasing curvature (K), and
- during the following of the target trajectory ($T_{soll}$), determines a longitudinal acceleration resulting from the target trajectory ($T_{soll}$) at the current position of the vehicle (1) as the current trajectory acceleration ($a_{refPtOrth}$),
- a limiting unit (5.5) is provided which limits the closed loop controller actuating acceleration ($a_{ctrl}$) to a value which corresponds to at most a sum of the current trajectory acceleration ($a_{refPtOrth}$) and the acceleration offset ($a_{offset}$),
- a closed loop acceleration control unit (6), which is subordinate to the closed loop trajectory controller (5.2), is provided, which accelerates the vehicle (1) in accordance with the limited closed loop controller actuating acceleration ($a_{ctrl\_lim}$).

7. Apparatus (2) according to Claim 6, wherein the closed loop acceleration control unit (6) is a vehicle braking system.

8. Apparatus (2) according to Claim 6 or 7, comprising a closed loop control fault monitoring unit which, when a predetermined difference between the predetermined closed loop controller actuating acceleration ($a_{ctrl}$) and the limited closed loop controller actuating acceleration ($a_{ctrl\_lim}$) is exceeded, carries out a recalculation of the target trajectory ($T_{soll}$).

**Revendications**

1. Procédé de commande longitudinale d'un véhicule (1) en fonction d'une trajectoire cible ($T_{soll}$), qui spécifie une série de positions cibles ($P_{k-n}$ à $P_{k+m}$) devant être adoptées par le véhicule (1) dans le temps (t), dans lequel

- sur la base d'un état réel (Z) du véhicule (1), une accélération de commande de dispositif de commande ($a_{ctrl}$) est déterminée pour la commande de trajectoire, avec laquelle le véhicule (1) doit être accéléré en fonction de spécifications de la trajectoire cible ($T_{soll}$),
- pendant que le véhicule (1) parcourt la trajectoire cible ($T_{soll}$), une courbure (K) de la trajectoire cible ($T_{soll}$) à une position actuelle du véhicule (1) est déterminée à partir d'une variation locale de la trajectoire cible ($T_{soll}$),
- sur la base de la courbure (K), un décalage d'accélération ($a_{offset}$) décroissant lorsque la courbure (K) augmente est déterminé,
- pendant que la trajectoire cible ($T_{soll}$) est parcourue, à la position actuelle du véhicule (1), une accélération longitudinale obtenue à partir de la trajectoire cible ($T_{soll}$) est déterminée en tant qu'accélération de trajectoire actuelle ($a_{refPtOrth}$),
- l'accélération de commande de dispositif de commande ($a_{ctrl}$) est limitée à une valeur correspondant au maximum à une somme de l'accélération de trajectoire actuelle ($a_{refPtOrth}$) et du décalage d'accélération ($a_{offset}$), et
- le véhicule (1) est accéléré en fonction de l'accélération de commande de dispositif de commande limitée ($a_{ctrl\_lim}$).

2. Procédé selon la revendication 1, dans lequel l'état réel (Z) du véhicule (1) est établi au moins à partir d'une vitesse réelle ($v_{ist}$), d'une accélération réelle ($a_{ist}$) et/ou d'une position réelle ($P_{ist}$) du véhicule (1).

3. Procédé selon la revendication 1 ou 2, dans lequel une position actuelle du véhicule (1) est utilisée en tant que position réelle ($P_{ist}$) ou que position cible suivante ($P_k$) parmi la série des positions cibles ($P_{k-n}$ à $P_{k+m}$).

4. Procédé selon l'une des revendications précédentes, dans lequel

- la trajectoire cible ($T_{soll}$) est délivrée à un dispositif de commande de trajectoire (5.2), au moyen duquel, sur la base de l'accélération de commande de dispositif de commande ($a_{ctrl}$), le véhicule (1) doit être accéléré en fonction de spécifications de la trajectoire cible ($T_{soll}$) et

- l'accélération de commande de dispositif de commande limitée ($a_{ctrl\_lim}$) est délivrée à une unité de commande d'accélération (6) subordonnée au dispositif de commande de trajectoire (5.2), laquelle commande et/ou régule une accélération réelle (a) du véhicule (1).

5. Procédé selon l'une des revendications précédentes, dans lequel un nouveau calcul de la trajectoire cible ($T_{soll}$) est effectué en cas de dépassement d'une différence spécifiée entre l'accélération de commande de dispositif de commande spécifiée ($a_{ctrl}$) et l'accélération de commande de dispositif de commande limitée ($a_{ctrl\_lim}$).

6. Dispositif (2) de commande longitudinale d'un véhicule (1) en fonction d'une trajectoire cible ($T_{soll}$), qui spécifie une série de positions cibles ($P_{k-n}$ à $P_{k+m}$) devant être adoptées par le véhicule (1) dans le temps (t), dans lequel

- il est prévu un dispositif de commande de trajectoire (5.2) qui, sur la base d'une trajectoire cible ($T_{soll}$) qui lui est délivrée et sur la base d'un état réel (Z) du véhicule (1), détermine une accélération de commande de dispositif de commande ($a_{ctrl}$) pour la commande de trajectoire, avec laquelle le véhicule (1) doit être accéléré en fonction des spécifications de la trajectoire cible ($T_{soll}$),

- il est prévu une unité de prétraitement (5.1), qui

- pendant que le véhicule (1) parcourt la trajectoire cible ($T_{soll}$), détermine une courbure (K) de la trajectoire cible ($T_{soll}$) à une position actuelle du véhicule (1) à partir d'une variation locale de la trajectoire cible ($T_{soll}$),

- sur la base de la courbure (K), détermine un décalage d'accélération ($a_{offset}$) décroissant lorsque la courbure (K) augmente, et

- pendant que la trajectoire cible ($T_{soll}$) est parcourue, à la position actuelle du véhicule (1), détermine une accélération longitudinale obtenue à partir de la trajectoire cible ($T_{soll}$) en tant qu'accélération de trajectoire actuelle ($a_{refPtOrth}$),

- il est prévu une unité de limitation (5.5) qui limite l'accélération de commande de dispositif de commande ($a_{ctrl}$) à une valeur correspondant au maximum à une somme de l'accélération de trajectoire actuelle ($a_{refPtOrth}$) et du décalage d'accélération ($a_{offset}$),

- il est prévu une unité de commande d'accélération (6) subordonnée au dispositif de commande de trajectoire (5.2), qui accélère le véhicule (1) en fonction de l'accélération de commande de dispositif de commande limitée ($a_{ctrl\_lim}$).

7. Dispositif (2) selon la revendication 6, dans lequel l'unité de commande d'accélération (6) est un système de freinage de véhicule.

8. Dispositif (2) selon la revendication 6 ou 7, comprenant une unité de surveillance d'erreur de commande qui effectue un nouveau calcul de la trajectoire cible ($T_{soll}$) en cas de dépassement d'une différence spécifiée entre l'accélération de commande de dispositif de commande spécifiée ($a_{ctrl}$) et l'accélération de commande de dispositif de commande limitée ($a_{ctrl\_lim}$).

FIG 1

FIG 2

FIG 3

EP 4 429 926 B1

FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102017010180 B3
- DE 102018125250 A1
- US 2021078573 A1
- EP 1008482 A2